# EUROPÄISCHE PATENTSCHRIFT

(11) **EP 3 835 612 B1**
(45) Veröffentlichungstag und Bekanntmachung des Hinweises auf die Patenterteilung: **24.08.2022**
(21) Anmeldenummer: 19214814.6
(22) Anmeldetag: 10.12.2019
(51) Int. Cl.: F16D 65/00

(54) **SCHEIBENBREMSE, INSBESONDERE FÜR NUTZFAHRZEUGE UND FAHRZEUG MIT EINER SCHEIBENBREMSE, INSBESONDERE NUTZFAHRZEUG MIT EINER SCHEIBENBREMSE**
DISC BRAKE, ESPECIALLY FOR COMMERCIAL VEHICLES AND VEHICLE COMPRISING A DISC BRAKE, ESPECIALLY A COMMERCIAL VEHICLE COMPRISING A DISC BRAKE
FREIN À DISQUE, EN PARTICULIER POUR VÉHICULES UTILITAIRES ET VÉHICULE DOTÉ D'UN FREIN À DISQUE, EN PARTICULIER VÉHICULE UTILITAIRE DOTÉ D'UN FREIN À DISQUE

(43) Veröffentlichungstag der Anmeldung: 16.06.2021
(73) Patentinhaber: ZF CV Systems Europe BV, 1170 Brussels (BE)
(72) Erfinder: HENNING, Paul, 68723 Schwetzingen (DE)
(74) Vertreter: Rabe, Dirk-Heinrich

(56) Entgegenhaltungen:
- EP-A1- 0 412 541
- EP-A1- 1 610 025
- DE-A1- 2 255 678
- DE-A1-102015 209 818
- DE-A1-102017 105 641
- JP-A- H08 105 467
- US-A1- 2007 119 665

## Beschreibung

Die Erfindung betrifft eine Scheibenbremse, insbesondere für Nutzfahrzeuge mit einem Bremssattel und Bremsbelägen, die eine Bremsscheibe Zuspannen, wobei der Bremssattel einen ersten Innenraum mit einer Öffnung auf der einer Bremsscheibe zugewandten Seite zur Aufnahme einer Zuspanneinrichtung aufweist, und der Bremssattel einen zweiten Innenraum zur Aufnahme der Bremsscheibe aufweist.

Scheibenbremsen der eingangs genannten Art sind bekannt, beispielsweise aus der DE 10 2012 016 712 A1. Die Scheibenbremse weist einen Bremssattel für eine Gleitsattelscheibenbremse auf. Mittels zwei in dem Bremssattel eingelassenen Bolzenführungen gleitet der Bremssattel axial in Richtung der Bremsscheibe auf Führungsbolzen eines Bremsträgers der Scheibenbremse und spannt die Bremsscheibe während eines Bremsvorgangs zu. Der Bremsträger weist zwei sich gegenüberliegende Bremsbelagschächte zur Aufnahme und Anordnung der Bremsbeläge auf. Die Bremsbeläge werden im Bremsträger axial verschiebbar geführt und abgestützt. Die Halterung der Bremsbeläge erfolgt durch einen Belagniederhaltebügel und durch Niederhaltefedern. Nachteilig an Bremsenträgern für Nutzfahrzeuge, insbesondere für schwere Nutzfahrzeuge, ist das hohe Eigengewicht von mindestens 9 kg. Innerhalb des ersten Innenraums ist ein als Zuspanneinrichtung ausgebildeter Aktuator angeordnet, der den zuspannseitigen Bremsbelag über die Öffnung des ersten Innenraums zuspannt. Aktuelle Zuspanneinrichtungen benötigen zur Anordnung einen hohen Bauraumbedarf in dem Bremssattel. Als Zuspannseite ist diejenige Seite der Scheibenbremse definiert, an der die Zuspanneinrichtung in der Scheibenbremse angeordnet ist. Als Reaktionsseite ist die der Zuspannseite gegenüberliegende Seite der Scheibenbremse definiert. Zur Korrektur des Belagverschleißes der Bremsbeläge weist die Zuspanneinrichtung der Scheibenbremse eine Nachstellvorrichtung auf. Die Nachstellvorrichtung ist dazu ausgelegt, ein Lüftspiel, also der Abstand zwischen dem Bremsbelag und der Bremsscheibe, konstant zu halten. Die Nachstellung erfolgt bei modernen Scheibenbremsen automatisch. Die Nachstellvorrichtung ist wie die Zuspanneinrichtung in dem ersten Innenraum des Bremssattels oder in einem als Boxkern ausgestalteten zusätzlichen Innenraum des Bremssattels angeordnet, sodass der Bremssattel zur Aufnahme der Zuspanneinrichtung und der Nachstellvorrichtung axial und radial ausreichend groß dimensioniert sein muss.

Neue Bremskonzepte gehen hin zu einer schmaleren Bauform der Zuspanneinrichtung. Die schmale Bauform der Zuspanneinrichtung ergibt sich aus der Folge von reduzierten Belagdicken der Bremsbeläge, die eine axiale Anordnung in gleicher Baulänge wie parallel angeordnete Zuspann- und Nachstelleinrichtungen erlauben. Eine solche bauraumreduzierte Zuspanneinheit ist beispielsweise in der DE 10 2017 004 436 A1 gezeigt. Ein weiteres Beispiel einer Zugspanneinheit ist in JP H08 105467 A offenbart.

Aufgabe der Erfindung ist es, eine Scheibenbremse mit einem Bremssattel und Bremsbelägen bereitzustellen, die Bauraumvorteile aufweist, leicht ist und Herstellungskosten senkt.

Gelöst wird die Aufgabe durch eine Scheibenbremse nach Anspruch 1, die erfindungsgemäß Vorsprünge zur Aufnahme von Bremsbelägen in einem zweiten Innenraum eines Bremssattels einer Scheibenbremse aufweist.

Mit den Anordnungen der Vorsprünge innerhalb des Bremssattels kann der Bremsträger zur Aufnahme der Bremsbeläge entfallen, wodurch das Gesamtgewicht der Scheibenbremse und die Herstellungskosten reduziert werden. Mit dem Wegfall des Bremsträgers wird zusätzlich Bauraum innerhalb eines Fahrzeugs frei, der anderweitig genutzt werden kann. Vorteilhaft sind weiterhin die kleine Dimensionierung der Scheibenbremse zu Transportzwecken und der einfachere Aufbau während der Montage, da zusätzliche Bauteile, wie der Bremsträger, entfallen. Die Anordnung von Vorsprüngen zur Aufnahme der Bremsbeläge direkt in dem Bremssattel eignet sich besonders für einen Bremssattel, der in einem ersten Innenraum des Bremssattels eine in der Breite und der Länge schmal bauende und eine hintereinander angeordnete Zuspanneinheit aufnimmt. Durch die geringe Dimensionierung der Zuspanneinheit entsteht zusätzlicher Freiraum in dem Bremssattel. In dem zusätzlich zur Verfügung stehenden Freiraum des Bremssattels können die Vorsprünge angeordnet werden, ohne dass der Bremssattel größer dimensioniert werden muss.

In einer weiteren vorteilhaften Ausgestaltung sind je zwei Vorsprünge gegenüberliegend angeordnet und bilden einen Belagträgerschacht zur Aufnahme des Bremsbelags. Ein Bremsbelagträgerschacht ist an der Zuspannseite in dem zweiten Innenraum des Bremssattels der Scheibenbremse angeordnet. Ein weiterer Bremsbelagträgerschacht ist, bezogen auf die Bremsscheibe, achsparallel auf der der Zuspannseite gegenüberliegenden Reaktionsseite in dem zweiten Innenraum des Bremssattels der Scheibenbremse angeordnet. Der Belagträgerschacht vereinfacht die Montage der zu der Scheibenbremse dazugehörigen Bremsbeläge. Nur in der Größe richtig dimensionierte Bremsbeläge passen in die aus den Vorsprüngen geformten Bremsbelagträgerschächten. Als Größe der Bremsbeläge ist die Länge, die Breite und die Tiefe eines Bremsbelags zu verstehen.

In einer weiteren Ausführung weisen zwei axiale Querstreben des Bremssattels je zwei in Richtung des zweiten Innenraums liegende Teilbereiche auf, die als Vorsprünge ausgebildet sind. Es sind auch mehr Teilbereiche an den axialen Querstreben denkbar, aus denen die Vorsprünge gebildet sind. Die Teilbereiche an den axialen Querstreben beschränken ohne zusätzlichen Materialaufwand die Bremsbeläge senkrecht zur axialen Achse des Bremssattels. Der Bereich des Bremsscheibeneinlaufs und der Bereich des Bremsscheibenauslaufs bleiben frei von Teilbereichen, die als Vorsprünge ausgebildet sind.

Die Vorsprünge sind in einer weiteren Ausgestaltung L-förmig ausgebildet, sodass der Bremsbeläge kipp- und verdrehsicher in dem Bremssattels angeordnet sind. Mit der L-förmigen Ausgestaltung der Vorsprünge wird zudem ein Herausdrehen der Bremsbeläge aus dem Bremssattel verhindert.

In einer weiteren Ausführung sind die Vorsprünge und der Bremssattel aus einem einzigen Bauteil geformt, wodurch Kosten im Herstellungsprozess verringert werden.

Der aus einem Bauteil geformte Bremssattel mit den Vorsprüngen ist in einer weiteren Ausgestaltung aus einem verwindungssteifen Gussformteil oder aus einem leicht zu bearbeitenden Aluminiumbauteil oder ein aus einem leicht zu bearbeitenden Verbundwerkstoff geformtes Bauteil geformt. Neben der leichten Bearbeitung weisen die Werkstoffe Aluminium und der Verbundwerkstoff gegenüber anderen Materialien zusätzlich ein leichtes Gesamtgewicht auf. Zudem können die aus Aluminium oder einem Verbundwerkstoff geformten Vorsprünge leicht aus dem Bauteil, zum Beispiel durch Wälz- oder Prägeprozesse, geformt und nachbearbeitet werden.

In einer weiteren vorteilhaften Ausgestaltung ist der erste Innenraum zur Aufnahme einer Zuspanneinrichtung und einer Nachstellvorrichtung ausgebildet. Die Anordnung der Zuspanneinrichtung und der Nachstelleinrichtung axial nacheinander, sowie deren Anordnung in dem ersten Innenraum des Bremssattels, erfordert weniger Bauraum in dem Bremssattel, weshalb der erste Innenraum des Bremssattels kleiner dimensioniert werden kann und zusätzlich Bauraum in dem zweiten Innenraum des Bremssattels zur Anordnung der Vorsprünge und zusätzlicher Bauraum zur Aufnahme der Bremsbeläge in den Vorsprüngen vorhanden ist.

Es hat sich weiterhin als Vorteil erwiesen, dass die Bremsbeläge Abstützflächen zur Anordnung an den Vorsprüngen aufweisen. Die Bremsbeläge weisen zur Verdrehsicherung umfangsseitig Abstützflächen auf, die in der Dimension, d.h. in der Länge und Tiefe oder der Höhe und der Tiefe, den Vorsprüngen entsprechen.

In einer weiteren Ausgestaltung liegen Abstützflächen des Bremsbelags senkrecht zu der axialen Achse des Bremssattels an den Vorsprünge an und liegen in radialer Richtung an den Vorsprünge auf. Die Abstützflächen bilden vorteilhaft eine Art Kodierung. Der Einbau falscher Bremsbeläge wird verhindert, da nur Bremsbeläge, bei denen die Abstützflächen mit den Vorsprüngen des Bremssattels übereinstimmen, in den Bremssattel passen.

In einer weiteren Ausbildung ist die axiale Länge der Abstützflächen des an der Zuspannseite der Scheibenbremse angeordneten Bremsbelags kleiner, als eine axiale Länge der Vorsprünge an der Zuspannseite des Bremssattels. Die zusätzliche Länge der Vorsprünge an der Zuspannseite des Bremssattels ermöglicht eine Nachstellung des Lüftspiels mittels Verschieben des Bremssattels in Richtung der Bremsscheibe. Als Lüftspiel ist der Abstand zwischen der Bremsscheibe und dem Bremsbelag definiert.

Weiterhin ist die axiale Länge der Vorsprünge an der Zuspannseite des Bremssattels in einer weiteren Ausführung aus der Summe der axialen Länge der zuspannseitigen Abstützflächen, einem Verschleißmaß des reaktionsseitigen Bremsbelags und einem Verschleißmaß der Bremsscheibe gebildet. Die axiale Länge der Vorsprünge an der Zuspannseite des Bremssattels entspricht damit der maximalen Lüftspielnachstellung des zuspannseitigen Bremsbelags, und damit dem maximalen Verschleiß des zuspannseitigen Bremsbelags und dem maximalen Verschleiß des reaktionsseitigen Bremsbelags.

In einer Weiterbildung weist der der Bremssattel der Scheibenbremse axial zwei Bolzenführungen zur Anordnung an einem fahrzeugseitigen Achsflansch auf. Koaxial an den zwei Bolzenführungen ist je ein Bolzenführungsdeckel zum Schutz gegen Umwelteinflüsse und Korrosion angeordnet. Der Bremssattel der Scheibenbremse ist über zwei in je einer Bolzenführung angeordneten Bolzenschrauben an einem fahrzeugseitigen Achsflansch fixiert. Weitere Befestigungsmittel zur Anordnung der Scheibenbremse an dem fahrzeugseitigen Achsflansch sind nicht notwendig.

In einer letzten Ausgestaltung sind die Bolzenführungsdeckel über eine Schraubverbindung oder eine Clipverbindung an den Bolzenführungen angeordnet. Die Schraubverbindung und die Clipverbindung weisen den Vorteil einer einfachen Montage und einer einfachen Demontage der Bolzenführungsdeckel auf.

Nachfolgend werden ausgewählte Ausführungsbeispiele der Erfindung anhand der beigefügten Figuren erläutert.

Es zeigt:
Fig. 1 eine Scheibenbremse mit einem Bremssattel mit Vorsprüngen in einer seitlich gedrehten Draufsicht,
Fig. 2 einen zuspannseitigen Bremsbelag des Bremssattels nach Fig. 1 in einer seitlich gedrehten Ansicht,
Fig. 2a einen reaktionsseitigen Bremsbelag des Bremssattels nach Fig. 1 in einer seitlich gedrehten Ansicht,
Fig. 3, 3a, 3b unterschiedliche Ansichten eines Bremssattels einer Scheibenbremse nach Fig. 1.
Fig. 4 eine Scheibenbremse nach Fig. 1 mit einem Bremssattel nach den Fig. 1 und 3, 3a, 3b.

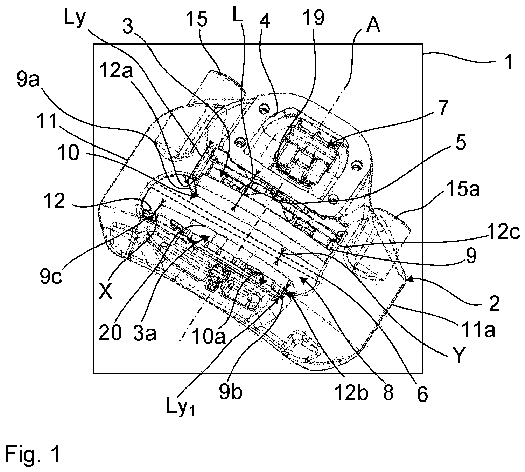

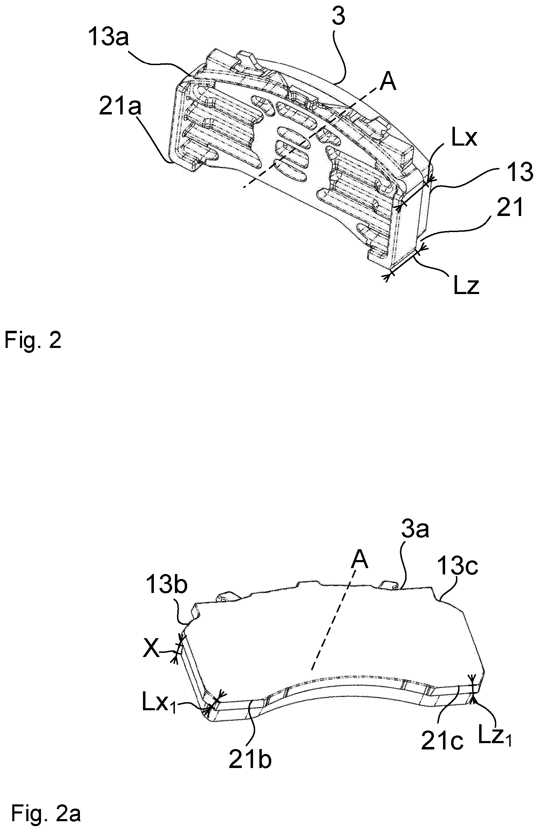

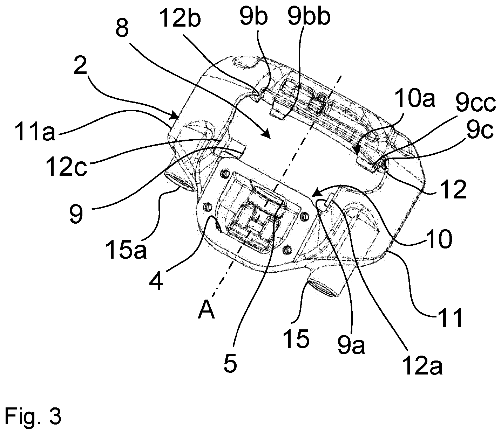

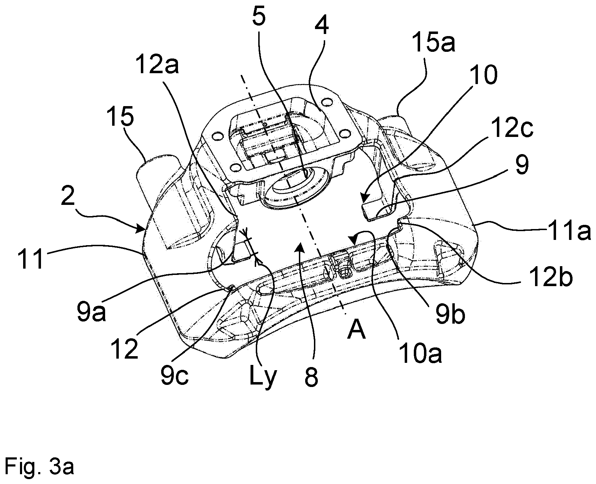

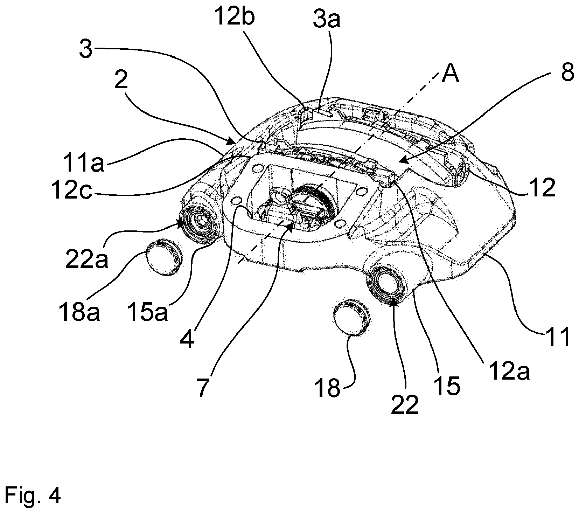

Fig. 1 zeigt eine erfindungsgemäße Scheibenbremse 1 mit einem Bremssattel 2. In den Bremssattel 2 ist, ausgehend von einer axialen Achse A des Bremssattels 2, zuspannseitig, eine als erster Innenraum 4 ausgeformte Vertiefung zur Aufnahme einer axial nacheinander angeordneten Zuspanneinrichtung 7 eingebracht. Die Zuspanneinrichtung 7 spannt eine Bremsscheibe 6 über den zuspannseitigen Bremsbelag 3, den reaktionsseitigen Bremsbelag 3a und über eine, in dem ersten Innenraum 4, axial in Richtung der Bremsscheibe 6, eingebrachte Öffnung 5 zu. Zur Aufnahme eines zuspannseitigen Bremsbelags 3 und eines reaktionsseitigen Bremsbelags 3a und einer zwischen dem zuspannseitigen Bremsbelag 3 und dem reaktionsseitigen Bremsbelag 3a angeordneten Bremsscheibe 6, weist der Bremssattel 2 einen zweiten Innenraum 8 auf. In Richtung des zweiten Innenraums 8 des Bremssattels 2, sind an einer ersten axialen Querstrebe 11 Teilbereiche 12, 12a und an einer zweiten axialen Querstrebe 12a Teilbereiche 12b, 12c ausgebildet. Aus den Teilbereichen sind Vorsprünge 9, 9a, 9b, 9bb, 9c, 9cc ausgebildet, wobei der Vorsprung 9bb und der Vorsprung 9cc in Fig. 3a gezeigt sind. Die Vorsprünge 9, 9a sind L-förmig ausgebildet, wobei die Vorsprünge 9, 9a einen Belagträgerschacht 10 zur Aufnahme des Bremsbelags 3a bilden und die Vorsprünge 9b, 9c einen Belagträgerschacht 10a zur Aufnahme des Bremsbelags 3 bilden. Die Vorsprünge 9, 9a weisen axial eine Länge Ly auf, die sich aus einer axialen Länge L des Bremsbelags 3 und einem Belagverschleiß X des reaktionsseitigen Bremsbelags 3a zusammensetzen. Unter einem Belagverschleiß x (s. Fig. 2a) ist die Abnutzung eines Reibbelags 20 des reaktionsseitigen Bremsbelags 3a zu verstehen. Mit der Verlängerung der Vorsprünge 9, 9a um den Belagverschleiß X des Bremsbelags 3a, wird die Verschiebung des Bremssattels 2, und damit auch die Verschiebung des Bremsbelags 3 in Richtung des der Bremsscheibe 6 berücksichtigt, wodurch ein Herausfallen des zuspannseitigen Bremsbelags 3 aus dem Bremssattel 2 unterbunden wird. Der Bremssattel 2 weist zudem zwei Bolzenführungen 15, 15a auf, die in Fig. 4 näher beschrieben sind. Ein Verschleißmaß Y der Bremsscheibe 6 ist in Fig. 2, 2a näher beschrieben.

Eine detaillierte Ansicht des zuspannseitigen Bremsbelags 3 und des reaktionsseitigen Bremsbelags 3a ist in Figur 2 und Figur 2a gezeigt. Die Bremsbeläge 3, 3a weisen seitlich an ihren Umfang Abstützflächen 13, 13a, 13b, 13c und Auflageflächen 21, 21a, 21b, 21c auf, wobei die Abstützflächen 13, 13a, 13b, 13c senkrecht zur axialen Achse A des Bremssattels 2 (Fig. 1) mit den Vorsprüngen 9, 9a, 9b, 9c des Bremssattels (Fig.1) in Kontakt sind und die Auflageflächen 21, 21a, 21b, 21c radial mit den Vorsprüngen 9, 9a, 9b, 9c (Fig. 1) in Kontakt sind. Der zuspannseitige Bremsbelag 3 unterscheidet sich von dem reaktionsseitigen Bremsbelag 3a nur durch die Dimensionierung der Auflageflächen 21, 21a, 21b, 21c und der Abstützflächen 13, 13a, 13b, 13c. Durch die genaue Positionierung und Anordnung der Bremsbeläge 3, 3a an den Vorsprüngen 9, 9a, 9b, 9c wird ein Verkanten und ein Herausfallen der Bremsbeläge 3, 3a aus dem Bremssattel 2 verhindert. Bei dem zuspannseitigen Bremsbelag 3 ist die axiale Länge Lx der Abstützflächen 13, 13a kleiner als die axiale Länge Ly der Vorsprünge 9, 9a (Fig. 1). Die axiale Länge Ly der Vorsprünge 9, 9a setzt sich aus der axiale Länge Lx der Abstützflächen 13, 13a,
dem Verschleißmaß X des reaktionsseitigen Bremsbelags 3a und dem Verschleißmaß Y (Fig. 1) der Bremsscheibe 6 zusammen.

Eine axiale Länge Lz der Auflagefläche 21, 21a, entspricht der axialen Länge Ly der Vorsprünge 9, 9a (Fig. 1). Bei dem reaktionsseitigen Bremsbelag 3a entspricht eine axiale Länge Lx₁ der Abstützflächen 13b, 13c der axialen Länge Ly₁ der Abstützung 9b, 9c (Fig. 1), und eine axiale Länge Lz₁ der Auflagefläche 21b, 21c, entspricht der axialen Länge Ly₁ der Vorsprünge 9bb, 9cc (Fig. 1).

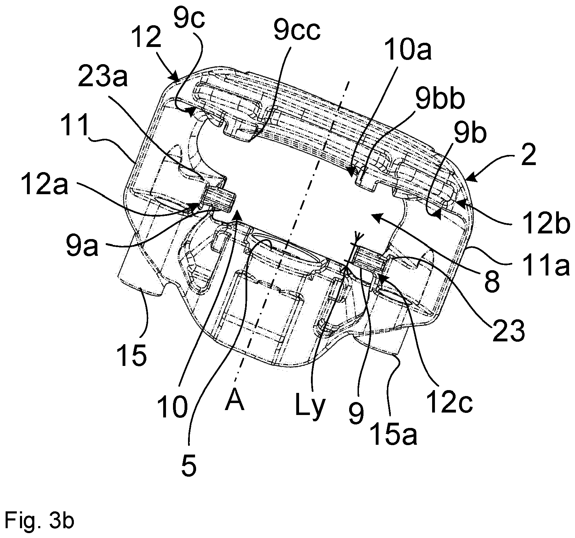

Fig. 3, 3a ,3b zeigen drei Ansichten des Bremssattels 2 der Scheibenbremse 1 nach Figur 1 bis Fig. 2a, jedoch ohne Bremsbeläge 3, 3a. Insbesondere wird noch einmal die L-förmige Ausgestaltung der zuspannseitigen Vorsprünge 9, 9a gezeigt. Weiterhin ist gegenüber den reaktionsseitigen Vorsprünge 9b, 9bb, 9c, 9cc besonders gut die axiale Verlängerung der Vorsprünge 9, 9a um den Belagverschleiß X des Bremsbelags 3a (Fig. 1, Fig. 2, Fig. 2a) sichtbar.

In Fig. 4 ist die Anordnung des Bolzenführungsdeckels 18 der Bolzenführung 15 und die Anordnung des Bolzenführungsdeckels 18a der Bolzenführung 15a gezeigt. Die Bolzenführungsdeckel 18 wird, axial in Richtung der Zuspanneinrichtung 7, über ein Gewinde 22 der Bolzenführung 15 mit der Bolzenführung 15 verschraubt und der weitere Bolzenführungsdeckel 18a wird, axial in Richtung der Zuspanneinrichtung 7, über ein Gewinde 22a der Bolzenführung 15a mit der Bolzenführung 15a verschraubt. Zu Ansichtszwecken ist in der Bolzenführung 15a eine Bolzenschraube 16 zur Anbindung an eine nicht gezeigte Fahrzeugachse gezeigt. Die Bolzenschraube 16 wird zur Montage der Scheibenbremse 1 an die nicht gezeigte Fahrzeugachse aus der Bolzenführung 15a gedreht, nachdem der Bolzenführungsdeckel 18a von der Bolzenführung 15 abgeschraubt wurde. Anschließend wird die Bolzenschraube 16 wieder in die Bolzenführung 15 hineingedreht.

### Bezugszeichenliste als Teil der Beschreibung

- 1: Scheibenbremse
- 2: Bremssattel
- 3: zuspannseitiger Bremsbelag
- 3a: reaktionsseitiger Bremsbelag
- 4: erster Innenraum
- 5: Öffnung des ersten Innenraums 4
- 6: Bremsscheibe
- 7: Zuspanneinrichtung
- 8: zweiter Innenraum
- 9, 9a,: Vorsprünge an der Zuspannseite des Bremssattels 2
- 9b, 9bb, 9c, 9cc: Vorsprünge an der Reaktionsseite des Bremssattels 2
- 10, 10a: Belagträgerschächte
- 11: erste axiale Querstrebe
- 11a: zweite axiale Querstrebe
- 12, 12a: Teilbereiche der axialen Querstrebe 11
- 12b, 12c: Teilbereiche der axialen Querstrebe 11a
- 13, 13a: Abstützflächen des Bremsbelags 3
- 13b, 13c: Abstützflächen des Bremsbelags 3a
- 15, 15a: Bolzenführungen des Bremssattels 2
- 16: Bolzenschraube der Bolzenführung 15a
- 18, 18a: Bolzenführungsdeckel
- 20: Reibbelag des Bremsbelags 3a
- 21, 21a: Auflageflächen des Bremsbelags 3
- 21b, 21c: Auflageflächen des Bremsbelags3a
- 22: Gewinde der Bolzenführung 15
- 22a: Gewinde der Bolzenführung 15a
- A: axiale Achse
- L: axiale Länge des Bremsbelags 3
- Lx: axiale Länge der Abstützflächen 13, 13a
- Lx₁: axiale Länge der Abstützflächen 13b, 13c
- Ly: axiale Länge der Vorsprünge 9, 9a
- Ly₁: axiale Länge der Vorsprünge 9b, 9c
- Lz: axiale Länge der Auflageflächen 21, 21a
- Lz₁: axiale Länge der Auflageflächen 21b, 21c
- X: Belagverschleiß des reaktionsseitigen Bremsbelags 3a
- Y: Verschleißmaß der Bremsscheibe 6

## Patentansprüche

1. Scheibenbremse (1) für Fahrzeuge, insbesondere für Nutzfahrzeuge, mit einem Bremssattel (2) und Bremsbelägen (3, 3a) zum Zuspannen einer Bremsscheibe (6), wobei der Bremssattel (2) einen ersten Innenraum (4) mit einer Öffnung (5) auf der der Bremsscheibe (6) zugewandten Seite zur Aufnahme einer Zuspanneinrichtung (7) aufweist, und der Bremssattel (2) einen zweiten Innenraum (8) zur Aufnahme der Bremsscheibe (6) aufweist, **dadurch gekennzeichnet, dass** der Bremssattel (2) in dem zweiten Innenraum (8) Vorsprünge (9, 9a) zur Aufnahme des zuspannseitigen Bremsbelags (3) und Vorsprünge (9b, 9bb, 9c, 9cc) zur Aufnahme des reaktionsseitigen Bremsbelags (3a) aufweist.

2. Scheibenbremse (1) nach Anspruch 1, **dadurch gekennzeichnet, dass** die Vorsprünge (9, 9a) gegenüberliegend angeordnet sind und einen Belagträgerschacht (10) zur Aufnahme des zuspannseitigen Bremsbelags (3) bilden und das die Vorsprünge (9b, 9c) gegenüberliegend angeordnet sind und die Vorsprünge (9bb, 9cc) parallel einer axialen Achse (A) des Bremssattels (2) angeordnet sind und einen weiteren Belagträgerschacht (10a) zur Aufnahme des reaktionsseitigen Bremsbelags (3a) bilden.

3. Scheibenbremse (1) nach Anspruch 1 oder 2, **dadurch gekennzeichnet, dass** der Bremssattel (2) zwei axiale Querstreben (11, 11a) aufweist und zwei in Richtung des zweiten Innenraums (8) liegender Teilbereiche (12, 12a) der axialen Querstrebe (11) als Vorsprünge (9a, 9b) ausgebildet sind und zwei in Richtung des zweiten Innenraums (8) liegende Teilbereiche (12b, 12c) der axialen Querstrebe (11a) als Vorsprünge (9, 9b) ausgebildet ist.

4. Scheibenbremse (1) nach einem der vorangegangenen Ansprüche, **dadurch gekennzeichnet, dass** die Vorsprünge (9, 9a; 9b, 9c) L-förmig ausgebildet sind.

5. Scheibenbremse (1) nach einem der vorangegangenen Ansprüche, **dadurch gekennzeichnet, dass** der Bremssattel (2) und die Vorsprünge (9, 9a; 9b, 9bb, 9c, 9cc) aus einem Bauteil geformt sind.

6. Scheibenbremse (1) nach Anspruch 5, **dadurch gekennzeichnet, dass** das Bauteil ein Gussformteil, ein Aluminiumbauteil oder ein aus einem Verbundwerkstoff geformtes Bauteil ist.

7. Scheibenbremse (1) nach einem der vorangegangenen Ansprüche, **dadurch gekennzeichnet, dass** der erste Innenraum (4) zur Aufnahme einer axial angeordneten Zuspanneinrichtung (7) ausgebildet ist.

8. Scheibenbremse nach einem der vorangegangenen Ansprüche, **dadurch gekennzeichnet, dass** der zuspannseitige Bremsbelag (3) Abstützflächen (13, 13a) und Auflageflächen (21, 21a) zur Anordnung an den Vorsprüngen (9, 9a) aufweisen und das der reaktionsseitige Bremsbelag (3a) Abstützflächen (13b, 13c) und Auflageflächen (21b, 21c) zur Anordnung an den Vorsprüngen (9b, 9bb, 9c, 9cc) aufweisen.

9. Scheibenbremse (1) nach Anspruch 8, **dadurch gekennzeichnet**, die Abstützflächen (13, 13a) senkrecht zu der axialen Achse (A) an den Vorsprüngen (9, 9a) der Zuspannseite des Bremssattels (2) anliegen und die Auflageflächen (21, 21a) radial an den Vorsprüngen (9, 9a) aufliegen und das die Vorsprünge (13b, 13c) senkrecht zu der axialen Achse (A) an den Vorsprüngen 9b, 9c) anliegen und das die Auflageflächen (21b, 21c) radial an den Vorsprüngen (9b, 9bb, 9c, 9cc) aufliegen.

10. Scheibenbremse (1) nach Anspruch 8 oder 9, **dadurch gekennzeichnet, dass** die axiale Länge (Lx) der Abstützflächen (13, 13a) des an der Zuspannseite der Scheibenbremse (2) angeordneten Bremsbelags (3) kleiner ist, als eine axiale Länge (Ly) der Vorsprünge (9, 9a) an der Zuspannseite des Bremssattels (2).

11. Scheibenbremse (1) nach Anspruch 10, **dadurch gekennzeichnet, dass** die axiale Länge (Ly) der Vorsprünge (9, 9a) an der Zuspannseite des Bremssattels (2) aus der Summe der axialen Länge (Lx) der Abstützflächen (13, 13a), einem Verschleißmaß (X) des reaktionsseitigen Bremsbelags (3a) und einem Verschleißmaß (Y) der Bremsscheibe (6) gebildet ist.

12. Scheibenbremse (1) nach einem der vorangegangenen Ansprüche, **dadurch gekennzeichnet, dass** der Bremssattel (2) eine Bolzenführung (15, 15a) mit einem koaxial an der Bolzenführung (15, 15a) des Bremssattels (2) angeordneten Bolzenführungsdeckel (18, 18a) aufweist.

13. Scheibenbremse (1) nach Anspruch 12, **dadurch gekennzeichnet, dass** der Bolzenführungsdeckel (18, 18a) an der Bolzenführung (15, 15a) über einer Schraubverbindung oder einer Clipverbindung befestig ist.

## Claims

1. A disc brake (1) for vehicles, in particular for commercial vehicles, having a brake caliper (2) and brake linings (3, 3a) for applying a brake disc (6), wherein the brake caliper (2) comprises a first interior (4) with an opening (5) on the side facing the brake disc (6) for receiving an actuating device (7), and the brake caliper (2) comprises a second interior (8) for receiving the brake disc (6), **characterized in that** the brake caliper (2) in the second interior (8) comprises protrusions (9, 9a) for receiving the application side brake lining (3) and protrusions (9b, 9bb, 9c, 9cc) for receiving the reaction side brake lining (3a).

2. The disc brake (1) according to claim 1, **characterized in that** the protrusions (9, 9a) are arranged opposite one another and form a lining carrier well (10) for receiving the application side brake lining (3) and that the protrusions (9b, 9c) are arranged opposite one another and the protrusions (9bb, 9cc) are arranged parallel to an axial axle (A) of the brake caliper (2) and form a further lining carrier well (10a) for receiving the reaction side brake lining (3a).

3. The disc brake (1) according to claim 1 or 2, **characterized in that** the brake caliper (2) comprises two axial cross bars (11, 11a) and two subregions (12, 12a) of the axial cross bar (11) lying in the direction of the second interior (8) are embodied as protrusions (9a, 9b) and two subregions (12b, 12c) of the axial cross bar (11a) lying in the direction of the second interior (8) are embodied as protrusions (9, 9b).

4. The disc brake (1) according to any of the foregoing claims, **characterized in that** the protrusions (9, 9a; 9b, 9c) are embodied L-shaped.

5. The disc brake (1) according to any of the foregoing claims, **characterized in that** the brake caliper (2) and the protrusions (9, 9a; 9b, 9bb, 9c, 9cc) are formed from one component.

6. The disc brake (1) according to claim 5, **characterized in that** the component is a casting mold part, an aluminum component or a component formed from a composite material.

7. The disc brake (1) according to any of the foregoing claims, **characterized in that** the first interior (4) is embodied for receiving an axially arranged actuating device (7).

8. The disc brake according to any of the foregoing claims, **characterized in that** the application side brake lining (3) comprises support surfaces (13, 13a) and contact surfaces (21, 21a) for arrangement on the protrusions (9, 9a) and that the reaction side brake lining (3a) comprises support surfaces (13b, 13c) and contact surfaces (21b, 21c) for arrangement on the protrusions (9b, 9bb, 9c, 9cc).

9. The disc brake (1) according to claim 8, **characterized in that** the support surfaces (13, 13a) are perpendicular to the axial axle (A) on the protrusions (9, 9a) of the application side of the brake caliper (2) and the contact surfaces (21, 21a) are rest radially on the protrusions (9, 9a) and that the protrusions (13b, 13c) are perpendicular to the axial axle (A) on the protrusions (9b, 9c) and that the contact surfaces (21b, 21c) rest radially on the protrusions (9b, 9bb, 9c, 9cc).

10. The disc brake (1) according to claim 8 or 9, **characterized in that** the axial length (Lx) of the support surfaces (13, 13a) of the brake lining (3) arranged on the application side of the disc brake (2) is smaller than the axial length (Ly) of the protrusions (9, 9a) on the application side of the brake caliper (2).

11. The disc brake (1) according to claim 10, **characterized in that** the axial length (Ly) of the protrusions (9, 9a) on the application side of the brake caliper (2) is formed from the sum of the axial length (Lx) of the support surfaces (13, 13a), a wear dimension (X) of the reaction side brake lining (3) and a wear dimension (Y) of the brake disc (6).

12. The disc brake (1) according to any of the foregoing claims, **characterized in that** the brake caliper (2) comprises a bolt guide (15, 15a) having a bolt guide cover (18, 18a) arranged coaxially on the bolt guide (15, 15a) of the brake caliper (2).

13. The disc brake (1) according to claim 12, **characterized in that** the bolt guide cover (18, 18a) is attached on the bolt guide (15, 15a) via a screw connection or a clip connection.

## Revendications

1. Frein à disque (1) pour véhicules, en particulier pour véhicules utilitaires, avec un étrier de frein (2) et des garnitures de frein (3, 3a) pour le serrage d'un disque de frein (6), dans lequel l'étrier de frein (2) présente un premier espace intérieur (4) avec une ouverture (5) sur la face tournée vers le disque de frein (6) pour la réception d'un dispositif de serrage (7), et l'étrier de frein (2) présente un deuxième espace intérieur (8) pour la réception du disque de frein (6), **caractérisé en ce que** l'étrier de frein (2) présente dans le deuxième espace intérieur (8) des parties saillantes (9, 9a) pour la réception de la garniture de frein côté serrage (3) et des parties saillantes (9b, 9bb, 9c, 9cc) pour la réception de la garniture de frein côté réaction (3a).

2. Frein à disque (1) selon la revendication 1, **caractérisé en ce que** les parties saillantes (9, 9a) sont disposées en vis-à-vis et forment un puits de support de garniture (10) pour la réception de la garniture de frein côté serrage (3) et que les parties saillantes (9b, 9c) sont disposées en vis-à-vis et les parties saillantes (9bb, 9cc) sont disposées parallèlement à un axe axial (A) de l'étrier de frein (2) et forment un autre puits de support de garniture (10a) pour la réception de la garniture de frein côté réaction (3a).

3. Frein à disque (1) selon la revendication 1 ou 2, **caractérisé en ce que** l'étrier de frein (2) présente deux traverses axiales (11, 11a) et deux zones partielles (12, 12a) de la traverse axiale (11) situées en direction du deuxième espace intérieur (8) sont réalisées sous la forme de parties saillantes (9a, 9b) et deux zones partielles (12b, 12c) de la traverse axiale (11a) situées en direction du deuxième espace intérieur (8) sont réalisées sous la forme de parties saillantes (9, 9b) .

4. Frein à disque (1) selon l'une quelconque des revendications précédentes, **caractérisé en ce que** les parties saillantes (9, 9a ; 9b, 9c) sont réalisées en forme de L.

5. Frein à disque (1) selon l'une quelconque des revendications précédentes, **caractérisé en ce que** l'étrier de frein (2) et les parties saillantes (9, 9a ; 9b, 9bb, 9c, 9cc) sont formés à partir d'un composant.

6. Frein à disque (1) selon la revendication 5, **caractérisé en ce que** le composant est une pièce moulée par coulée, un composant en aluminium ou un composant formé d'un matériau composite.

7. Frein à disque (1) selon l'une quelconque des revendications précédentes, **caractérisé en ce que** le premier espace intérieur (4) est réalisé pour la réception d'un dispositif de serrage (7) disposé axialement.

8. Frein à disque selon l'une quelconque des revendications précédentes, **caractérisé en ce que** la garniture de frein côté serrage (3) présente des surfaces d'appui (13, 13a) et des surfaces de support (21, 21a) pour la disposition sur les parties saillantes (9, 9a) et que la garniture de frein côté réaction (3a) présente des surfaces d'appui (13b, 13b) et des surfaces de support (21b, 21c) pour la disposition sur les parties saillantes (9b, 9bb, 9c, 9cc).

9. Frein à disque (1) selon la revendication 8, **caractérisé en ce que** les surfaces d'appui (13, 13a) s'appliquent perpendiculairement à l'axe axial (A) sur les parties saillantes (9, 9a) du côté de serrage de l'étrier de frein (2) et les surfaces de support (21, 21a) reposent radialement sur les parties saillantes (9, 9a) et que les parties saillantes (13b, 13c) s'appliquent perpendiculairement à l'axe axial (A) sur les parties saillantes (9b, 9c) et que les surfaces de support (21b, 21c) reposent radialement sur les parties saillantes (9b, 9bb, 9c, 9cc).

10. Frein à disque (1) selon la revendication 8 ou 9, **caractérisé en ce que** la longueur axiale (Lx) des surfaces d'appui (13, 13a) de la garniture de frein (3) disposée sur le côté de serrage du frein à disque (2) est inférieure à une longueur axiale (Ly) des parties saillantes (9, 9a) sur le côté de serrage de l'étrier de frein (2).

11. Frein à disque (1) selon la revendication 10, **caractérisé en ce que** la longueur axiale (Ly) des parties saillantes (9, 9a) sur le côté de serrage de l'étrier de frein (2) est formée de la somme de la longueur axiale (Lx) des surfaces d'appui (13, 13a), d'une grandeur d'usure (X) de la garniture de frein côté réaction (3a) et d'une grandeur d'usure (Y) du disque de frein (6).

12. Frein à disque (1) selon l'une quelconque des revendications précédentes, **caractérisé en ce que** l'étrier de frein (2) présente un guidage de boulon (15, 15a) avec un couvercle de guidage de boulon (18, 18a) disposé coaxialement sur le guidage de boulon (15, 15a) de l'étrier de frein (2).

13. Frein à disque (1) selon la revendication 12, **caractérisé en ce que** le couvercle de guidage de boulon (18, 18a) est fixé sur le guidage de boulon (15, 15a) par l'intermédiaire d'une liaison vissée ou d'une liaison par clip.
